# EUROPÄISCHE PATENTANMELDUNG

(11) **EP 1 367 380 A1**
(43) Veröffentlichungstag der Anmeldung: **03.12.2003**
(21) Anmeldenummer: 03101218.0
(22) Anmeldetag: 02.05.2003
(51) Int. Cl.: G01N 1/28

(54) **Verfahren und Vorrichtung zur automatischen Lokalisierung sowie Manipulation von Zellen**

(30) Priorität: 02.05.2002 AT 6752002
(71) Anmelder: Sedlmayr, Peter, 8010 Graz (AT)
(72) Erfinder: Sedlmayr, Peter, Dr., 8010 Graz (AT); Dohr, Gottfried, Dr., 8044 Graz (AT)
(74) Vertreter: KLIMENT & HENHAPEL

(57) **Zusammenfassung**

Verfahren zur Lokalisierung und physischen Manipulation von Zielzellen (ZZ) in einer auf einem Objektträger (3) angeordneten Probe, wobei in einem ersten Verfahrensschritt durch automatisiertes, schrittweises Abtasten des Objektträgers (3) aufgrund der Detektion und Analyse optischer Signale Zielzellen (ZZ) erkannt und deren Positionsdaten (x, y) relativ zum Objektträger (3) in digitaler Form erhoben werden, und in einem zweiten Verfahrensschritt eine Isolierung der Zielzelle (ZZ) vom Objektträger (3) auf Basis der im ersten Verfahrensschritt automatisiert erhobenen Positionsdaten (x, y) erfolgt, wobei die Isolierung der Zielzelle (ZZ) vom Objektträger (3) berührungslos durch Einwirkung eines fokussierten Laserstrahls erfolgt. Weiters wird eine Vorrichtung zur Durchführung des erfindungemäßen Verfahrens vorgeschlagen.

## Beschreibung

Die Erfindung bezieht sich auf ein Verfahren zur Lokalisierung und physischen Mikromanipulation von Zielzellen in einer auf einem Objektträger angeordneten Probe gemäß dem Oberbegriff von Anspruch 1 sowie eine Vorrichtung zur Durchführung des Verfahrens gemäß dem Oberbegriff von Anspruch 8.

Moderne Analysetechniken haben es ermöglicht, nicht nur einzelne Zellen zu erfassen und zu beobachten, sondern sie auch einzeln zu manipulieren. Dazu zählen Mikromanipulations-Techniken wie etwa die Mikroinjektion, bei der mit feinen Glasnadeln Material in die gewünschte Zielzelle injiziert wird, oder auch verschiedene Mikrodissektions-Techniken, bei denen mithilfe von Laserstrahlen einzelne Zellen aus der am Objektträger befindlichen Probe isoliert werden können. Diese Techniken bedienen sich in der Regel optischer Instrumente zur vergrößerten Darstellung der Zielzellen, etwa Mikroskope in unterschiedlichen Ausführungen wie z.B. Fluoreszenzmikroskope. Die untersuchende Person sucht dabei mithilfe manueller Bedienung von Einstelleinrichtungen des Mikroskops den Objektträger unter visueller Kontrolle ab und erkennt schließlich die zu behandelnden Zielzellen oder -zellgruppen. Nach Auffinden der gewünschten Zielzelle wird unter Beibehaltung der entsprechenden Einstellungen des Mikroskops die Mikromanipulation an der Zielzelle vorgenommen.

Diese Vorgangsweise wird bei abnehmender Anzahl an Zielzellen in der zur Verfügung stehenden Probe langwieriger, da das Auffinden einer Zielzelle erschwert wird. Deshalb wird üblicherweise versucht, die Zielzellen vor deren Analyse über Mikroskop und darauffolgender Mikromanipulation mithilfe physikalischer (wie Dichtezentrifugation) oder auch biochemischer oder immunologischer Verfahren in der Probe anzureichern. In manchen Fällen sind aber die zu untersuchenden Zellen in Proben dermaßen selten, dass auch nach aufwändigen Anreicherungsverfahren die Anzahl der Zielzellen so gering und ihre Konzentration so niedrig ist dass Mikromanipulations-Techniken dadurch sehr erschwert werden. Der Einsatzbereich dieser Mikromanipulations-Verfahren bleibt dadurch beschränkt.

WO 01/33190 A2 offenbart ein Verfahren, bei dem die Koordinaten von Zielzellen automatisiert erhoben und einer speziellen Mikrodissektions-Einrichtung, nämlich einem LCM ("Laser Capture Microdissection") zugeführt werden. Im Rahmen des LCM wird ein thermoplastischer Film über einen die Zielzelle enthaltenden Bereich des Objektträgers gelegt und über einen Infrarotlaser an der gewünschten Stelle aktiviert. Der Film schmilzt an dieser Stelle und verklebt dadurch mit den darunter liegenden Stellen des Probenmaterials (z.B. Gewebeschnitt oder Zytozentrifugat einer Körperflüssigkeit). Durch Ablösen des Films kann die Zielzelle aus dem Schnitt entfernt werden. Eine Anwendbarkeit der automatisiert erhobenen Positionsdaten auf andere Manipulationstechniken wird in WO 01/33190 A2 nicht in Aussicht gestellt und ist auch nicht selbstverständlich, da bei der Ansteuerung eines Infrarotlasers für den Eintrag von Wärmeenergie in einen thermoplastischen Film vergleichsweise geringe Genauigkeiten der Laserpositionierung vonnöten sind als dies etwa bei einer berührungslosen Isolierung einer Zielzelle per UV-Laser erforderlich ist. Es ist keineswegs offensichtlich, dass die automatisiert erhobenen Positionsdaten diese Genauigkeiten erfüllen. (Bei LCM hat der mit der Zielzelle verklebende Kunststofftropfen einen minimalen Durchmesser von ca. 6 Mikrometer. Der Tropfen für das Gewinnen von Einzelzellen kann auch einen größeren Durchmesser als die Zielzelle haben und muss nicht konzentrisch über ihr positioniert werden, sofern diese von ihm nur komplett überlappt wird.) Stattdessen wurde in herkömmlicher Weise davon ausgegangen, dass jedenfalls eine visuelle Kontrolle des Experimentators vonnöten ist, wenn etwa mittels eines gepulsten UV-Laserstrahls eine Zielzelle vom Objektträger katapultiert werden soll.

Erfindungsgemäß wird diese Auffassung überwunden und ein Verfahren vorgeschlagen, mit dem der Einsatz von fokussierten Laserstrahlen zur Isolierung von Zellen von einem Objektträger ausgeweitet wird und insbesondere bei der Analyse seltener Zellen einsatzfähig wird. Insbesondere wird dadurch auch eine weitere Automatisierung der Erkennung und Isolierung von Zielzellen von einem Objektträger ermöglicht. Dieses Ziel wird durch die kennzeichnenden Merkmale von Anspruch 1 erreicht.

Überraschenderweise ist nämlich eine visuelle Kontrolle nicht erforderlich, obwohl die Genauigkeit von Positionsdaten, die mithilfe automatisierter Auswertung von Fluoreszenzdaten gewonnen wurden, eigentlich nicht ausreichen sollte, um den UV-Laserstrahl ausreichend präzise anzusteuern. Andererseits wird in der Regel außer acht gelassen, dass die visuelle Kontrolle nur eine scheinbare Erhöhung der Genauigkeit bewirkt, da es sich bei den Bildern, die gemäß des Stands der Technik zur Ansteuerung des Lasers verwendet werden, lediglich um errechnete Daten handelt und kein reales Abbild der wirklichen Verhältnisse in der Probe sind. Wenngleich sich somit bei einer berührungslosen Isolierung von Zielzellen von einem Objektträger gänzlich andere Anforderungen als bei Techniken gemäß WO 01/33190 A2 ergeben, lassen sich in WO 01/33190 A2 beschriebene Methoden auch auf andere Manipulationstechniken anwenden, insbesondere auf die berührungslose Isolierung von Zielzellen mittels Laser.

Die berührungslose Isolierung einer Zielzelle vom Objektträger sowie deren Transfer in ein Auffanggefäß mithilfe eines Laserstrahls ist somit prinzipiell eine bekannte Methode, allerdings wird sie in herkömmlicher Weise nicht auf Basis von automatisiert erhobenen und in digitaler Form vorliegenden Positionsdaten der Zielzellen relativ zum Objektträger vorgenommen, sondern durch visuell-manuelles Vorgehen, d.h. der Experimentator sucht aktiv den Objektträger nach Zielzellen ab, positioniert eine erkannte Zielzelle im Gesichtsfeld seines Mikroskops und bedient anschließend die Einrichtung zur Manipulation der Zielzelle mithilfe des fokussierten Laserstrahls. In der weiteren Folge ergeben sich folgende zwei prinzipiellen Möglichkeiten: (1) Liegt die Zielzelle im Gewebsverband, oder liegt sie als Bestandteil einer Ansammlung von Einzelzellen (z.B. als Zytozentrifugat oder Ausstrich) auf einer mit dem Objektträger verklebten Trägermembran, legt der Anwender computergestützt eine Schnittkurve rund um die Zielzelle fest, die daraufhin vom Laserstrahl nachgefahren wird, wobei vorzugsweise an einer Stelle eine Brücke zum umgebenden Gewebe bzw. zur umgebenden Trägermembran belassen wird. Diese Brücke wird anschließend zur Isolierung der Zielzelle vom Objektträger angezielt. (2) Die Einzelzellen befinden sich direkt auf dem Glas-Objektträger: Hier entfällt der Verfahrensschnitt des Nachfahrens der Schnittkurve durch den Laser. Für das Katapultieren wird ein Zielpunkt vorzugsweise am Rand der Zelle ausgewählt, somit wird sowenig Energie wie möglich auf den Zellkern appliziert. In beiden Fällen werden die Positionsdaten der Zielzelle relativ zum Objektträger nicht explizit erhoben und auch nicht benötigt.

Wie oben dargelegt, kann der für die berührungslose Isolierung der Zielzelle mittels Laserstrahl gewählte Punkt vom Experimentator im Bereich der Brücke einer inkompletten kreisförmigen Schnittkurve um die Zelle in einer Trägermembran oder - bei Katapultieren direkt vom Glasobjektträger weg - am Rand der Zelle in einem entsprechend den mittleren Zellgrößen festzulegendem Abstand von Zellzentrum gewählt werden. Bei Vorliegen automatisiert erhobener Positionsdaten in digitaler Form können auch diese Positionierungen verwirklicht werden, indem ausgehend von den Positionsdaten von Zielzellen optimale Laserpositionierungen errechnet werden. Die für eine effektive Anwendung der Zielzellenkatapultierung mittels Laserlicht wesentliche Errechnung und Ansteuerung von Laserpositionierungen wird erfindungsgemäß auf der Basis von automatisiert erhobenen Daten durchgeführt.

WO 99/28725A1 beschreibt Mikrodissektionssysteme, bei denen das Ausführen der Mikrodissektion automatisiert werden soll. Hierzu wird die Position von "Micro-tools" automatisiert erhoben. Die Position der Zielzellen muss vom Experimentator durch manuelle-visuelle Inspektion erhoben werden. Anstatt die Positionsdaten von Zielzellen automatisiert zu erheben, werden die Positionsdaten des vom Experimentator gesetzten Fadenkreuzes ermittelt und für die Automatisierung der "Micro-tools" herangezogen.

Die EP 0 292 899 B1 bezieht sich ausschließlich auf ein System zur Mikroinjektion in Zellen bzw. zum Isolieren von Zielzellen mithilfe von Glaskapillaren. Des weiteren erfolgt keine automatisierte Ermittlung von Positionsdaten von Zielzellen. Der Experimentator markiert stattdessen eine im Gesichtsfeld seines Mikroskops visuell erkannte Zielzelle, wobei erst aufgrund seiner Markierung rechnergestützt Positionsdaten errechnet werden, die anschließend zur Steuerung der Kapillarenbewegung herangezogen werden.

DE 197 21 084 A1 bezieht sich ebenfalls auf ein Verfahren zur Manipulierung mikroskopischer Objekte zur Realisierung der Mikroinjektions- oder Mikroabsaugtechnik an biologischen Zellen. Verfahren zur Isolierung von Zielzellen vom Objektträger mithilfe von Laserstrahlen werden nicht erwähnt.

WO 99/04244 A1 bezieht sich auf ein Verfahren, das die Effizienz der Analyse von Zelleneigenschaften erhöhen soll. Eine bestimmte Methode der Isolierung von Zielzellen von Objektträgern sowie dessen Fundierung auf automatisiert erhobenen Positionsdaten von Zielzellen wird nicht erwähnt.

Anspruch 1 der gegenständlichen Erfindung sieht somit ein Verfahren zur Lokalisierung und physischen Manipulation von Zielzellen in einer auf einem Objektträger angeordneten Probe vor, wobei in einem ersten Verfahrensschritt durch automatisiertes, schrittweises Abtasten des Objektträgers aufgrund der Detektion und Analyse optischer Signale Zielzellen erkannt und deren Positionsdaten relativ zum Objektträger in digitaler Form erhoben werden, und in einem zweiten Verfahrensschritt eine Isolierung der Zielzelle vom Objektträger auf Basis der im ersten Verfahrensschritt automatisiert erhobenen Positionsdaten erfolgt, wobei die Isolierung der Zielzelle vom Objektträger berührungslos durch Einwirkung eines fokussierten Laserstrahls erfolgt. Da die anschließende Isolation der Zielzelle auf Basis ihrer Positionsdaten relativ zum Objektträger durchgeführt wird, ist auch eine räumliche und zeitliche Entkoppelung des Verfahrensschrittes der Erkennung bzw. Lokalisierung der Zielzelle auf dem Objektträger vom Verfahrensschritt der Mikromanipulation möglich. Im Sinne einer räumlichen Entkoppelung dieser beiden Verfahrensschritte ist es etwa möglich, die Erkennung der Zielzelle in anderen Apparaturen, etwa spezielle Vorrichtungen zur Auffindung von in Proben lediglich in sehr geringen Mengen vorhandenen Zielzellen, durchzuführen und die gewonnenen Positionsdaten sowie den entsprechenden Objektträger einer davon räumlich getrennten Apparatur zuzuführen, in der die anschließenden Mikromanipulations-Techniken vorgenommen werden. Aufgrund der Kenntnis der Positionsdaten einer Zielzelle relativ zum Objektträger kann eine rasche und einfache Relokalisierung erfolgen. Es ist aber auch augenscheinlich, dass das erfindungsgemäße Verfahren es aufgrund der Entkoppelung von Lokalisierung der Zielzelle und Mikromanipulation auf Basis einer Relokalisierung der Zielzelle es möglich ist, den Verfahrensschritt der Lokalisierung zu automatisieren und insbesondere Techniken anzuwenden, die sich zur Auffindung seltener Zellen in Proben eignen.

Die Ansprüche 2 bis 7 beziehen sich auf spezielle Verwendungen des erfindungsgemäßen Verfahrens, nämlich zur Lokalisierung und Manipulation von Zellen, die üblicherweise nur in sehr geringen Konzentrationen in Proben auftreten. Insbesondere in diesen Fällen erweist sich das erfindungsgemäße Verfahren als besonders vorteilhaft.

Anspruch 8 beschreibt eine Vorrichtung zur Lokalisierung und physischen Manipulation von Zielzellen in einer auf einem Objektträger angeordneten Probe, die eine Lokalisierungseinrichtung, welche den Objektträger automatisiert und schrittweise abtastet und aufgrund der Detektion und Analyse optischer Signale Zielzellen erkennt und deren Positionsdaten in digitaler Form automatisiert ermittelt, sowie eine Manipulationseinrichtung zur Isolierung der Zielzelle vom Objektträger auf Basis dieser Positionsdaten umfasst, wobei die Manipulationseinrichtung eine Lichtquelle zur Erzeugung eines fokussierten Laserstrahls mit einer Wellenlänge im ultravioletten Spektralbereich umfasst.

Die Erfindung wird nun anhand der beiliegenden Figuren näher erläutert, wobei die Figuren als Prinzipskizzen zu verstehen sind und die konkrete Ausführung von der dargestellten Anordnung abweichen kann. Dabei zeigen
Fig. 1 eine Ausführungsform des erfindungsgemäßen Verfahrens sowie des prinzipiellen Aufbaus der erfindungsgemäßen Vorrichtung, bei der die Einrichtung zur Lokalisierung der Zielzelle und die Einrichtung zur Manipulation der Zielzelle in räumlich voneinander getrennten apparativen Einheiten angeordnet sind, insbesondere
   Fig. 1a jenen Verfahrensschritt, bei dem die Positionsdaten der Zielzelle über ein Abtasten des Objektträgers ermittelt werden
   Fig. 1b jenen Verfahrensschritt, bei dem der Objektträger sowie die Positionsdaten an die Manipulationseinrichtung übermittelt werden und
   Fig. 1c jenen Verfahrensschritt, bei dem durch die Manipulationseinrichtung die Zielzelle auf Basis der übermittelten Positionsdaten relokalisiert und anschließend manipuliert wird, etwa über Laserstrahlen vom Objektträger berührungslos entfernt, sowie
Fig. 2 eine Ausführungsform des erfindungsgemäßen Verfahrens sowie des prinzipiellen Aufbaus der erfindungsgemäßen Vorrichtung, bei der die Einrichtung zur Lokalisierung der Zielzelle und die Einrichtung zur Manipulation der Zielzelle in derselben apparativen Einheiten angeordnet sind, insbesondere
   Fig. 2a jenen Verfahrensschritt, bei dem in einem ersten Betriebsmodus lediglich die Einrichtung zur Lokalisierung der Zielzelle aktiv ist und die Positionsdaten der Zielzelle über ein Abtasten des Objektträgers ermittelt werden,
   Fig. 2b jenen Verfahrensschritt, bei dem in einem zweiten Betriebsmodus lediglich die Einrichtung zur Manipulation der Zielzelle aktiv ist und die Zielzelle auf Basis der im ersten Betriebsmodus gewonnenen Positionsdaten relokalisiert und anschließend manipuliert wird, etwa über Laserstrahlen vom Objektträger berührungslos entfernt.

Eine Probe, etwa einer Körperflüssigkeit wie z.B. Blut oder auch eine Gewebeprobe, enthält zunächst eine Vielzahl an Zellen, von denen die überwiegende Mehrheit von Zellen Z für eine bestimmte Analyse nicht von Interesse ist, während eine Gruppe von Zielzellen ZZ einer weiteren Behandlung oder eingehenderen Analyse unterzogen werden soll und dazu auf einem Objektträger 3 aufgebracht wird. Bei dem Objektträger kann es sich dabei etwa auch um eine Kulturschale, ein "chamber slide" oder eine ähnliche Vorrichtung handeln, die geeignet ist, die Probe in einer einer Analyse durch die Lokalisierungseinrichtung 1 zugänglichen Form zu halten.

Die Bereitstellung der Probe in einer zur Anwendung des erfindungsgemäßen Verfahrens bzw. der erfindungsgemäßen Vorrichtung tauglichen Form erfordert den Einsatz hinlänglich bekannter biochemischer und molekularbiologischer Techniken. Es kann sich bei der Probe etwa um eine Gewebeprobe handeln, die auf das Auftreten bestimmter maligner Zellen untersucht werden soll, oder um eine Probe einer Körperflüssigkeit wie z.B. Blut. Im folgenden wird auf eine bevorzugte Verwendung des erfindungsgemäßen Verfahrens bzw. der erfindungsgemäßen Vorrichtung Bezug genommen, bei der die Mikromanipulation von Zellen, die in der dem Probanden entnommenen Probe nur mit sehr geringen Konzentrationen auftreten, vorzugsweise automatisiert ermöglicht werden soll. Dabei kann es sich etwa um fötale Erythroblasten in Blutproben schwangerer Frauen, okkulte Tumorzellen in Blutproben oder Proben anderer Körperflüssigkeiten oder in Gewebeproben, um seltene Transfektanten, Stammzellen oder andere undifferenzierte Zellen, um speziell differenzierte Zellen oder auch um infizierte Zellen handeln oder um Zellen, die anderweitig aufgrund der Einwirkung eines externen Faktors einen im Vergleich zu Zellen gleichen Typs unterschiedlichen Phänotyp aufweisen. In diesen Fällen wird es notwendig sein, die Zielzellen ZZ in der Probe etwa durch den Einsatz von Immunfluoreszenz-Methoden, FISH (Fluoreszenz-in-situ-Hybridisierung)-Techniken oder den Einsatz von Fluoreszenzfarbstoffen, die an die DNA der Zielzellen ZZ binden, zu markieren und dadurch von der überwiegenden Anzahl nicht-interessierender Zellen unterscheidbar zu machen. Alternativ dazu ist es auch denkbar, immunenzymatische Verfahren einzusetzen, oder mit direkter Anfärbung von Zellbestandteilen zu arbeiten. Soll das erfindungsgemäße Verfahren bzw. die erfindungsgemäße Vorrichtung etwa bei fötalen Erythroblasten eingesetzt werden, wird sich nach Voranreicherung über Dichtezentrifugation und über MACS (Magnetic Cell Sorting) mithilfe entsprechender Antikörper empfehlen. Da diese Vorgangsweise nicht hinlänglich selektiv für Erythroblasten ist, wird für einen weiteren Anreicherungsschritt eine Markierung hinsichtlich Gamma- oder Epsilonketten von fötalem oder embryonalem Hämoglobin notwendig sein, um sie etwa von Leukozyten zu diskriminieren (FITC). Der Einsatz von FISH-Techniken kann die Probenpräparation zur nachfolgenden Erkennung der Zielzellen ZZ komplettieren. Die jeweils bestgeeignete Methode bzw. Kombination an Methoden wird gemäß dem Stand der Technik je nach Art der Zielzellen ZZ und deren Konzentration in der Probe zu wählen sein. Es ist hierbei jedenfalls sicher zu stellen, dass die Markierung der Zielzellen ZZ ein hinlänglich starkes, meist optisches Signal erzeugt, um es der Lokalisierungseinrichtung 1 zu ermöglichen, die Zielzellen ZZ zu erkennen und von allen anderen in der Probe vorhandenen Zellen zu unterscheiden.

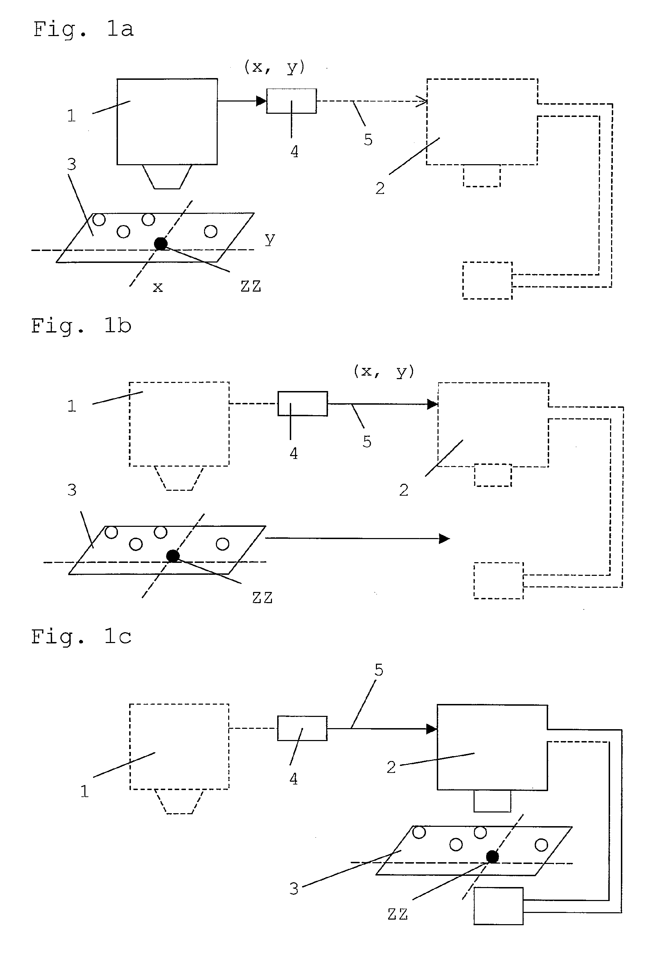

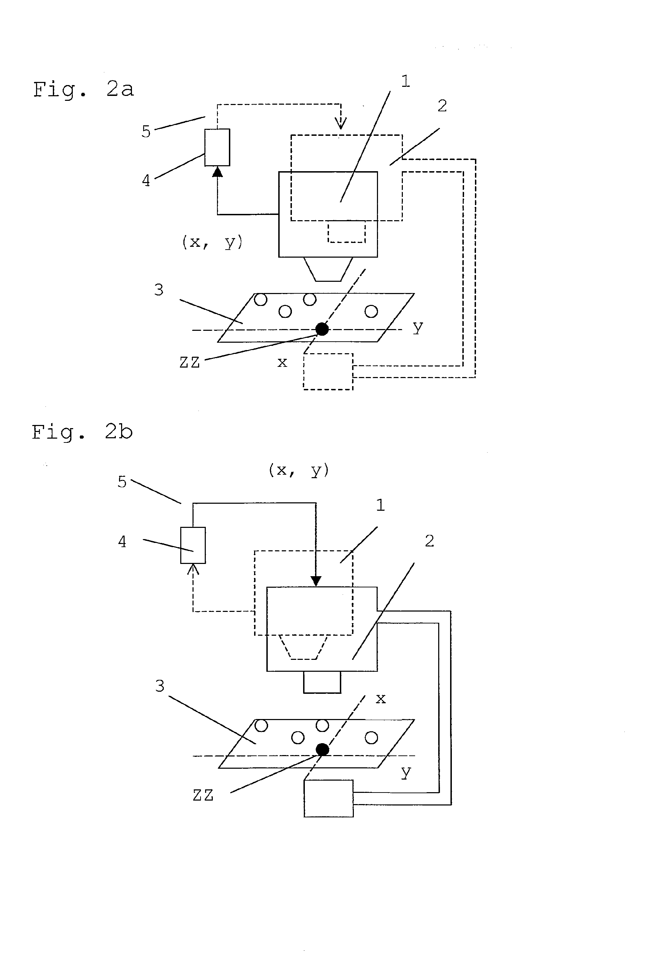

Bei der Lokalisierungseinrichtung 1 handelt es sich erfindungsgemäß um ein System, das geeignet ist den Objektträger schrittweise abzutasten und dabei optische Signale detektiert und analysiert. Geräte dieser Art sind gemäß dem Stand der Technik bekannt. Es kann sich dabei etwa um ein Laser Scanning Zytometer (LSC) handeln, das etwa bei Einsatz von Fluoreszenzmethoden dazu verwendet werden kann, unter Anwendung geeigneten Laserlichtes in genau definierten Bereichen des Objektträgers Fluoreszenz- und Streulichtsignale zu induzieren, diese zu detektieren sowie in weiterer Folge zu analysieren und so die Detektion von Zielzellen ZZ zu ermöglichen. Der Emissionspunkt des Fluoreszenzsignals am Objektträger gibt dabei die Position der Zielzelle ZZ am Objektträger an, die in Form der räumlichen Koordinaten gespeichert werden kann. Dabei kann es sich sowohl um zweidimensionale als auch dreidimensionale Koordinaten handeln. In weiterer Folge wird auf zweidimensionale Positionsdaten (x, y) Bezug genommen. Dieser Verfahrensschritt ist in Fig. 1a bzw. Fig. 2a schematisch dargestellt, wobei die Lokalisierungseinrichtung 1, etwa ein LSC, den Objektträger 3 abtastet und z.B. anhand von Fluoreszenzsignalen die Positionsdaten (x, y) der Zielzelle ZZ ermittelt und diese Daten mithilfe einer elektronischen Einheit 4 digitalisiert und speichert. Dieser Vorgang kann gemäß dem Stand der Technik auch automatisiert vorgenommen werden. Durch LSC-Geräte können dabei mehrere biochemische, immunologische und morphometrische Messungen an jeder Zelle vorgenommen werden, wobei aufgrund der gespeicherten Positionsdaten (x, y) die Zielzellen ZZ relokalisiert und etwa neugefärbt, vermessen oder photographiert werden können. LSC-Geräte sind in der Regel auch mit mehreren Farbfiltern sowie mehreren Photomultipliern ausgestattet, sodass gleichzeitig Fluoreszenz- oder Farbsignale unterschiedlicher Frequenz analysiert werden können. Die Zielzellen ZZ bleiben während ihrer Lokalisierung durch LSC-Geräte intakt und können daher anschließend z.B. für FISH-Methoden verwendet werden.

Da die Zielzellen ZZ auf dem Objektträger 3 immobilisiert sind, entsprechen bei vorsichtiger Handhabung des Objektträgers 3 die ermittelten Positionsdaten (x, y) auch zu einem späteren Zeitpunkt der tatsächlichen Position der Zielzellen ZZ am Objektträger 3. Dadurch kann nun gemäß Fig. 1b der Objektträger 3 in die Manipulationseinrichtung 2 transferiert werden. Entsprechende Datenübertragungseinrichtungen 5 ermöglichen die Übertragung der Positionsdaten (x, y) an die Manipulationseinrichtung 2.

Die Manipulationseinrichtung 2 ermöglicht eine physische Manipulation der Zielzellen ZZ. Techniken dieser Art sind gemäß dem Stand der Technik hinlänglich bekannt. In Einrichtungen zur konventionellen Mikromanipulation werden die Zielzellen ZZ mithilfe eines Gerätes, das mit feinen Glasnadeln ausgestattet ist, mechanisch vom Objektträger 3 entfernt und z.B. in ein Probenröhrchen (in den Fig. 1 und 2 nicht dargestellt) transferiert. Es kann sich bei der Manipulationseinrichtung 2 auch um ein Mikroinjektionssystem handeln, bei dem eine Glasnadel Material in die Zielzelle ZZ injiziert. Als Manipulationseinrichtung 2 kann auch ein Mikrodissektionssystem vorgesehen sein, bei dem ein thermoplastischer Film über einen die Zielzelle ZZ enthaltenden Bereich des Objektträgers 3 gelegt wird und ein Infrarotlaser den Film an der gewünschten Stelle aktiviert. Dieser bildet einen Tropfen, der mit den darunter liegenden Stellen des Probenmaterials (z.B. Gewebeschnitt oder Zytozentrifugat einer Körperflüssigkeit) verklebt. Durch Ablösen des Films kann die Zielzelle ZZ aus dem Schnitt entfernt werden. Alternativ dazu kann auch mittels eines fokussierten UV-Laserstrahls (etwa ein gepulster StickstoffLaser mit 337 nm und einem Strahlquerschnitt von 1um) die gewünschte Struktur aus einem Gewebsschnitt herausgeschnitten und mittels des Laserstrahls vom Objektträger 3 entfernt und in den Deckel eines Eppendorfhütchens katapultiert werden ("Laser Pressure Catapulting"). Bei Zytozentrifugen-Präparaten mit Einzelzellen kann die Laser-vermittelte Katapultierung der Zielzelle 3 vom Objektträger 3 ohne vorherigem Schneidvorgang vorgenommen werden. Geräte dieser Art können auch mit "optischen Zangen" ("optical tweezer") ausgerüstet sein, mit denen lebende Zellen mithilfe zweier Laserstrahlen manipuliert werden können.

Bei anderen Systemen gemäß dem Stand der Technik, die als Manipulationseinrichtung 2 verwendbar sind, kann vorgesehen sein, die Probe auf eine Plastikmembran aufzubringen. Der Gewebeschnitt und die Membran werden auf einen Glas-Objektträger 3 gelegt, sodass sich der Schnitt zwischen Glas und Membran befindet. Unter Verwendung eines UV-Lasers (Diodenlaser) wird sowohl das Gewebe als auch die Plastikmembran geschnitten. Der herausgeschnittene Probenteil wird gemeinsam mit der Membran mittels eines Klebematerials in einem Deckel eines Eppendorfhütchens entfernt.

In all den skizzierten Apparaturen ist dabei der Objektträgertisch (in den Fig. 1 und 2 nicht dargestellt) computergesteuert beweglich gehalten und über einen Schrittmotor angesteuert. Dadurch können selbstverständlich gespeicherte Positionen automatisiert wieder angefahren werden. Auch andere Realisierungen für unterschiedliche Arten der Mikromanipulation von Zielzellen ZZ sind gemäß dem Stand der Technik bekannt und für das erfindungsgemäße Verfahren bzw. die erfindungsgemäße Vorrichtung einsetzbar. Sie müssen lediglich dazu geeignet sein, aufgrund von Positionsdaten (x, y) eine Zielzelle ZZ auf einem Objektträger 3 zu relokalisieren, um nach Auffinden der Zielzelle ZZ eine gewünschte Mikromanipulation durchzuführen.

Eine alternative Ausführungsform des erfindungsgemäßen Verfahrens bzw. der erfindungsgemäßen Vorrichtung ist in Fig. 2 schematische dargestellt. Hierbei sind die beiden Einrichtungen 1 und 2 nicht in räumlichen voneinander getrennten Apparaturen angeordnet, sondern befinden sich in derselben apparativen Einheit. Die Lokalisierung und die Mikromanipulation der Zielzellen ZZ erfolgt vielmehr im Zuge zweier Betriebsmoden der erfindungemäßen Vorrichtung, bei denen im Betriebsmodus 1 (Fig. 2a) die Lokalisierung der Zielzellen ZZ erfolgt und im Betriebsmodus 2 (Fig. 2b) die Mikromanipulation der Zielzellen ZZ auf Basis der im Betriebsmodus 1 erhobenen Positionsdaten (x, y) erfolgt. Die oben getroffenen Bemerkungen gelten sinngemäß.

Die Anwendung des erfindungsgemäßen Verfahrens bzw. der erfindungsgemäßen Vorrichtung ist somit etwa in der Lage, automatisiert eine in einer Probe auch in geringsten Konzentrationen vorliegenden Zielzelle ZZ in dieser Probe zu lokalisieren und zu isolieren. Nach Durchführung des erfindungsgemäßen Verfahrens bzw. der erfindungsgemäßen Vorrichtung kann etwa eine RNA- bzw. Transkriptomanalyse der Zielzelle ZZ vorgenommen werden, die die Isolation von gesamtund polyA-RNA, die Anwendung von RT-PCR, Gen-Chip-Techniken (anhand von cDNA- oder Oligonukleotidarrays) oder Northern blots oder die Erstellung von cDNA-Bibliotheken umfassen kann. Zwecks Isolierung und Analyse der DNA können dem Fachmann hinlänglich bekannte Techniken wie Klonierung, PCR, Southern blots oder DNA-Sequenzierung angewendet oder die Erstellung genomischer Bibliotheken vorgenommen werden. Zwecks darauffolgender Proteinanalyse bzw. Proteomanalyse können etwa 2-D Elektrophorese, massenspektrometrische Methoden (z.B. LC-MS oder MALDI-TOF), NEPHGE ("Non-Equilibrium pH-Gradient Electrophoresis"), SDS-Gelelektrophorese, Immunoblots, Sequenzierung oder isoeletrische Fokussierung angewendet werden.

Isolierte, vitale Zielzellen ZZ können etwa als Klon weitergezüchtet werden. Über Anwendung von Laser-Mikrochirurgie können Zellteile entfernt oder über Laser-Mikroinjektionen Fremdmaterial eingebracht werden.

Bei all diesen, dem Fachmann hinlänglich bekannten Techniken ergibt sich durch Anwendung des erfindungsgemäßen Verfahrens bzw. der erfindungsgemäßen Vorrichtung der große Vorteil, dass auch Zielzellen ZZ einer Manipulation zugeführt werden können, die aufgrund ihrer geringen Konzentration in der dem Probanden entnommenen Probe für einen Einsatz dieser Techniken nicht geeignet waren. Dabei kann auch eine weitestgehende Automatisierung vorgenommen werden, die den Einsatzbereich zusätzlich vergrößert und deren routinemäßige Verwendung zu Analysezwecken ermöglicht.

Das erfindungsgemäße Verfahrens bzw. die erfindungsgemäße Vorrichtung soll nun anhand eines Ausführungsbeispiels näher illustriert werden.

### Ausführungsbeispiel:

Das erfindungemäße Verfahren bzw. die erfindungsgemäße Vorrichtung sollen zur Lokalisierung und Manipulation von fötalen Erythroblasten in Blutproben schwangerer Frauen angewendet werden. Diese Technik soll dabei eine Alternative zu invasiver Pränataldiagnostik mithilfe Amniozentese oder Chorionzottenbiopsie darstellen. Eine nicht-invasive Technik, bei der lediglich eine Blutprobe der Mutter erforderlich ist, um eventuelle Gesundheitsrisiken des Fötus zu untersuchen, würde die mit herkömmlichen, invasiven Verfahren verbundenen Risiken für den Fötus vermeiden.

Fötale Erythroblasten treten im peripheren Blutkreislauf der Mutter allerdings sehr selten auf (weniger als 10 pro ml Blut), sodass sie über physikalische und immunologische Methoden angereichert werden müssen. Durch den Einsatz des erfindungemäßen Verfahrens bzw. der erfindungsgemäßen Vorrichtung werden sie einer physischen Mikromanipulation wesentlich leichter zugänglich. Sie verfügen über die Vorteile, mononukleär, kurzlebig und nicht proliferierende fötale Zellen zu sein, sodass eine Persistenz aus einer vorherigen Schwangerschaft ausgeschlossen werden kann. Zusätzlich hat dieser Zelltyp Antigene auf der Oberfläche (CD 71), die zur Anreicherung verwendet werden können. Darüber hinaus erweist sich das im Zytoplasma vorhandene embryonale und fötale Hämoglobin als sehr wichtig, um eine Unterscheidung zwischen maternalen und fötalen Erythroblasten zu erleichtern.

Zunächst wird der Mutter eine Blutprobe entnommen und zunächst einer Dichtezentrifugation bei 400 x g über 30 Minuten unterworfen, um Erythroblasten von anderen Blutbestandteilen grob abzutrennen. Die angereicherten Erythroblasten werden mit anti-CD71 beschichteten Mikrokörper inkubiert und mit handelsüblichen Geräten separiert. Die CD71-positive Zellensuspension, die an diesem Schritt ungefähr 10⁶ Zellen pro Milliliter enthält, wird anschließend durch Zugabe gleicher Teile von 2%igem Paraformaldehyd (PFA) in PBS über 15 min bei 37° fixiert und mit Färbepuffer gewaschen (PBS + 2 mM EDTA + 0,5% BSA). Die Zellen werden mithilfe handelsüblicher Chemikalien permeabilisiert und mit 2 µg eines FITC-markierten monoklonalen Antikörpers gegen die gamma-Kette des HbF (fötales Hämoglobin) in Anwesenheit von 10% menschlichem AB-Serum für 15 min bei Raumtemperatur gefärbt. Die Zellen werden anschließend gewaschen und in einer Pufferlösung resuspendiert. Nach Zytozentrifugierung der Zellen auf einem Glasträger bei 57 x g für 5 min auf einer Fläche von 28,3 mm² können sie luftgetrocknet werden.

Zur Durchführung von FISH werden die Glasträger in kaltem Methanol/Eisessig (3:1) für 10 min fixiert, mit PBS bei Raumtemperatur für 10 min gewaschen und luftgetrocknet. Nach Lagerung in Natriumsalinzitrat bei pH 7.0 und 60°C für 1h werden sie wieder mit destilliertem Wasser gewaschen, mit einer Abfolge an unterschiedlichen Äthanol-Lösungen dehydriert (70%, 85% und 100%, jeweils 2 min) und luftgetrocknet. Die Hybridisierung kann etwa mit einem Spectrum Orangegekennzeichneten Markierungsmittel erfolgen, das spezifisch an das γ-Chromosom bindet und somit - im Fall von männlichen fötalen Zellen - den fötalen Charakter beweist. Die FISH wird nach der Denaturierung bei 70°C über Nacht in einer Hybridisierungskammer bei 37°C durchgeführt, wonach die Glasträger mit SSC gewaschen und luftgetrocknet werden.

Im Zuge der Erkennung fötaler Erythroblasten erweist es sich als notwendig, auch eine Färbung des Zellkerns mithilfe eines roten Kern-Fluorochroms, TO-PRO-3, durchzuführen, das bei einer Konzentration von 0,2µM (in PBS) gemeinsam mit Rnase A eingesetzt wird. Die Glasträger werden für 10 min bei Raumtemperatur inkubiert, mit PBS gewaschen, luftgetrocknet und in üblicher Weise aufbewahrt.

TO-PRO-3 wird in dieser Ausführungsform in der Lokalisierungseinrichtung 1 unter Verwendung eines LSC mithilfe eines HeNe-Lasers bei 633 nm angeregt und das FITC-Signal mithilfe eines Ar-Lasers bei 488 nm induziert. Das Abtasten wird vorzugsweise unter Verwendung eines 20x-Objektivs durchgeführt. Die TO-PRO-3-Fluoreszenz wird dabei als konturbestimmender Parameter herangezogen. Nach dem Abtasten werden jene Ereignisse, die sowohl das rote TO-PRO-3-Signal als auch das (grüne) FITC-Fluoreszenz-Signal zeigten, als potentielle Zielzellen ZZ interpretiert. Ihre Positionsdaten (x, y) relativ zum Objektträger 3 sind mithilfe der elektronischen Einheit 4 gespeichert. In dieser Ausführungsform ist eine visuelle Kontrolle der potentiellen Zielzellen ZZ vorgesehen, da gemäß dem momentanen Stand der Technik die Selektivität der kombinierten DNA- und Immunfluoreszenzfärbung für fötale Erythroblasten noch nicht zufriedenstellend ist. Daher kann durch die visuelle Kontrolle die nukleare Morphologie, die Immunfärbung des fötalen Hämoglobins und das Vorhandensein des FISH-Signals anhand eines vorliegenden γ-Chromosoms überprüft werden. Es ist augenscheinlich, dass diese Ausführungsform ausschließlich für fötale Erythroblasten männlicher Föten zuverlässig ist. Aufgrund dieser visuellen Kontrolle werden die Positionsdaten (x, y) der lokalisierten und definitiv identifizierten Zielzellen ZZ selektiert und in der elektronischen Einheit 4 gespeichert.

Zu einem späteren Zeitpunkt oder auch unmittelbar darauffolgend kann der Objektträger 3 in die Manipulationseinrichtung zur jeweils gewünschten Mikromanipulation transferiert werden. Gleichzeitig werden die Positionsdaten (x, y) an die zweite Manipulationseinrichtung 2 übertragen. Die Manipulationseinrichtung 2 ist etwa mit einem computergesteuerten "stepper"-Motor ausgestattet, der unterschiedliche Positionen des Objektträgers 3 in den Arbeitsbereich der Manipulationseinrichtung 2 bringen kann. Insbesondere wird aufgrund der Positionsdaten (x, y) der Bereich der Zielzelle ZZ auf dem Objektträger 3 angefahren. Die Zielzelle ZZ wird auf diese Weise rasch relokalisiert. Mittels eines UV-Laserstrahls (etwa ein gepulster StickstoffLaser mit 337 nm) wird die Zielzelle ZZ vom Objektträger 3 entfernt und in den Deckel eines Eppendorfhütchens katapultiert. Diese Verfahrensweise kann für mehrere Zielzellen ZZ wiederholt werden, sodass im Deckel des Eppendorfhütchens letztendlich eine Mehrzahl an in der ursprünglichen Probe äußerst selten vorkommenden Zellen vorliegt.

Die isolierten Zielzellen ZZ können nun einer weiteren Analyse, etwa von deren genetischem Material, unterzogen werden. Mit anschließender Anwendung von Gen-Chip-Techniken kann der Fötus etwa auf eine Vielzahl möglicher genetischer Anormalitäten untersucht werden. Eine Vielzahl an Diagnosemöglichkeiten steht zur Verfügung, ohne Mutter und Fötus dem Risiko invasiver pränataler Diagnoseverfahren auszusetzen.

## Patentansprüche

1. Verfahren zur Lokalisierung und physischen Manipulation von Zielzellen (ZZ) in einer auf einem Objektträger (3) angeordneten Probe, wobei in einem ersten Verfahrensschritt durch automatisiertes, schrittweises Abtasten des Objektträgers (3) aufgrund der Detektion und Analyse optischer Signale Zielzellen (ZZ) erkannt und deren Positionsdaten (x, y) relativ zum Objektträger (3) in digitaler Form erhoben werden, und in einem zweiten Verfahrensschritt eine Isolierung der Zielzelle (ZZ) vom Objektträger (3) auf Basis der im ersten Verfahrensschritt automatisiert erhobenen Positionsdaten (x, y) erfolgt, **dadurch gekennzeichnet, dass** die Isolierung der Zielzelle (ZZ) vom Objektträger (3) berührungslos durch Einwirkung eines fokussierten Laserstrahls erfolgt.

2. Verwendung des Verfahrens nach Anspruch 1, **dadurch gekennzeichnet, dass** es sich bei der Zielzelle (ZZ) um eine speziell differenzierte Zelle handelt.

3. Verwendung des Verfahrens nach Anspruch 1, **dadurch gekennzeichnet, dass** es sich bei der Zielzelle (ZZ) um eine fötale Zelle in Proben von Körperflüssigkeiten wie etwa Blut oder von Geweben von Frauen während oder nach Schwangerschaft handelt.

4. Verwendung des Verfahrens nach Anspruch 1, **dadurch gekennzeichnet, dass** es sich bei der Zielzelle (ZZ) um eine Tumorzelle handelt.

5. Verwendung des Verfahrens nach Anspruch 1, **dadurch gekennzeichnet, dass** es sich bei der Zielzelle (ZZ) um eine Transfektante handelt.

6. Verwendung des Verfahrens nach Anspruch 1, **dadurch gekennzeichnet, dass** es sich bei der Zielzelle (ZZ) um eine Stammzelle oder eine andere unreife Zelle handelt.

7. Verwendung des Verfahrens nach Anspruch 1, **dadurch gekennzeichnet, dass** es sich bei der Zielzelle (ZZ) um eine infizierte Zelle handelt oder um eine Zelle, die anderweitig aufgrund der Einwirkung eines externen Faktors einen im Vergleich zu Zellen gleichen Typs unterschiedlichen Phänotyp aufweist.

8. Vorrichtung zur Lokalisierung und physischen Manipulation von Zielzellen (ZZ) in einer auf einem Objektträger (3) angeordneten Probe, die eine Lokalisierungseinrichtung (1), welche den Objektträger (3) automatisiert und schrittweise abtastet und aufgrund der Detektion und Analyse optischer Signale Zielzellen (ZZ) erkennt und deren Positionsdaten in digitaler Form automatisiert ermittelt, sowie eine Manipulationseinrichtung (2) zur Isolierung der Zielzelle (ZZ) vom Objektträger (3) auf Basis dieser Positionsdaten (x, y) umfasst, **dadurch gekennzeichnet, dass** die Manipulationseinrichtung (2) eine Lichtquelle zur Erzeugung eines fokussierten Laserstrahls mit einer Wellenlänge im ultravioletten Spektralbereich umfasst.
